# FASCICULE DE BREVET EUROPEEN

(11) **EP 3 293 914 B1**
(45) Date de publication et mention de la délivrance du brevet: **12.06.2019**
(21) Numéro de dépôt: 17189561.8
(22) Date de dépôt: 06.09.2017
(51) Int. Cl.: H04L 12/10

(54) **COMMUTATEUR RESEAU A ALIMENTATION SAUVEGARDEE**
NETZSCHALTER MIT GESICHERTER STROMEINSPEISUNG
NETWORK SWITCH WITH BACKUP POWER

(30) Priorité: 09.09.2016 FR 1658388; 18.07.2017 FR 1756784
(43) Date de publication de la demande: 14.03.2018
(73) Titulaire: SLAT, 69410 Champagne au Mont d'Or (FR)
(72) Inventeur: BADOIL, Denis, 69210 BULLY (FR); HILD, Gérald, 01240 DOMPIERRE (FR)
(74) Mandataire: Cabinet Laurent & Charras

(56) Documents cités:
- US-A1- 2007 288 774
- US-A1- 2008 073 977
- US-A1- 2012 023 340
- US-B1- 7 478 251

## Description

### DOMAINE TECHNIQUE

La présente invention concerne le domaine des commutateurs réseau, dont l'alimentation est sauvegardée, au moins pour un temps donné, en cas de coupure d'alimentation.

Au sens de l'invention, un commutateur réseau est un dispositif électronique comportant au moins un connecteur amont, une pluralité de connecteurs avals, et un organe de routage configuré pour déterminer l'adresse physique de chaque périphérique connecté sur les connecteurs avals et pour router les flux réseau entre l'ensemble des connecteurs.

### ART ANTERIEUR

Afin de garantir l'alimentation électrique d'un commutateur réseau, il est connu d'utiliser un onduleur monté entre une prise d'alimentation électrique et l'alimentation du commutateur réseau. L'onduleur intègre classiquement un premier convertisseur de tension alternative en tension continue, une batterie reliée à la sortie de tension continue, et un second convertisseur de tension continue en tension alternative connecté d'une part à la batterie et, d'autre part, à la sortie de tension continue du premier convertisseur. Lorsque l'onduleur est connecté entre une prise d'alimentation électrique et l'alimentation du commutateur réseau, l'énergie électrique est transmise au commutateur réseau en passant par les deux convertisseurs, et la batterie est chargée. Lorsque l'alimentation électrique est coupée, l'alimentation électrique du commutateur réseau est assurée par la batterie dans les limites de sa charge.

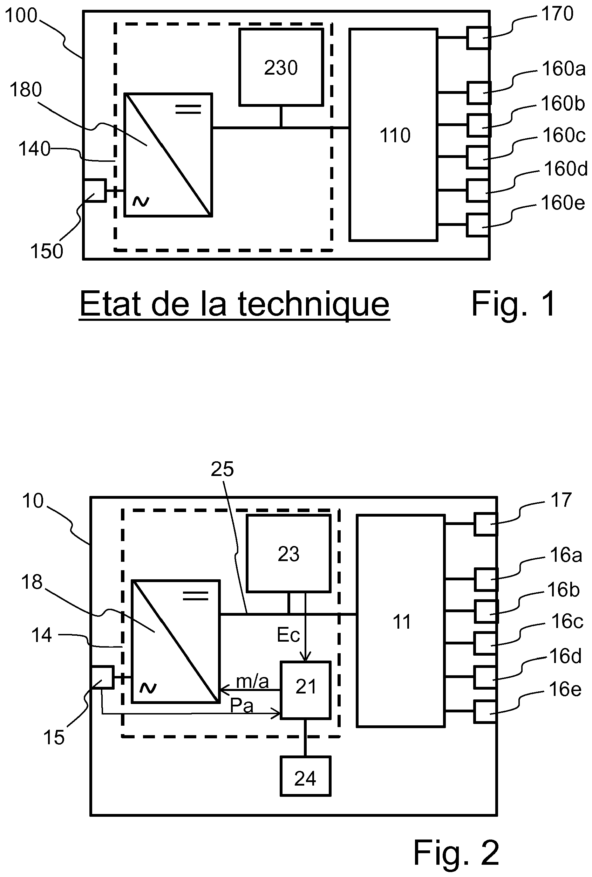

En variante, et ainsi que représenté sur la figure 1 illustrant l'art antérieur, un commutateur réseau **100** peut intégrer son propre dispositif de sauvegarde d'énergie **140**. Le dispositif de sauvegarde d'énergie **140** est réalisé par un convertisseur **180** de tension alternative en tension continue et une batterie **230**.

Le commutateur réseau **100** comporte au moins un connecteur amont **170**, une pluralité de connecteurs avals **160a-160e**, et un organe de routage **110** configuré pour déterminer l'adresse physique de chaque périphérique connecté sur les connecteurs **160a-160e**, **170** et pour router les flux réseau entre les connecteurs **160a-160e**, **170**.

L'organe de routage **110** est normalement alimenté par une énergie continue issue du convertisseur **180**. L'énergie continue est également utilisée pour charger la batterie **230**. Lorsqu'une coupure d'électricité survient, une entrée de tension alternative **150** n'est plus alimentée, et l'énergie continue du commutateur réseau **100** est fournie pour la batterie **230** dans les limites de sa capacité.

Cependant, lorsqu'une coupure longue survient, le commutateur réseau **100** devient inopérant dès que la batterie **230** est vide. Or, un commutateur réseau **100** intégré dans un bâtiment ou une agglomération est un élément sensible à travers lequel des informations de sécurité peuvent circuler. Par exemple, le commutateur réseau **100** peut être connecté sur un système de détection d'incendie afin d'informer, par le réseau, un serveur lors de la détection d'un incendie.

Le problème technique de l'invention est de maintenir le plus longtemps possible l'alimentation électrique d'un commutateur réseau **100** de sorte à garantir le transfert de données sensibles. Ce problème technique est classiquement résolu en augmentant la capacité de la batterie.

Le document US 7 478 251 décrit un commutateur réseau connecté sur un onduleur, l'onduleur intégrant son propre chargeur. Le commutateur réseau intègre des modes de fonctionnement dégradés dans lequel au moins un connecteur est déconnecté. Les périphériques sont classés selon leur type sorte à créer un backup différencié en fonction du type de périphérique. Lors d'une coupure d'électricité, chaque périphérique est maintenu ou non en fonction de son type . Il s'agit donc d'une régulation tout ou rien des périphériques qui peuvent fonctionner en cas de rupture de courant.

Le document US2007/0288774 décrit la gestion d'une alimentation électrique de plusieurs périphériques. Le réseau est relié au périphérique par une voie distincte de la ligne d'alimentation électrique. La régulation des périphériques est effectuée directement en fonction de leurs consommations, si bien que ce sont les périphériques les plus énergivores qui sont arrêtés en premier.

### EXPOSE DE L'INVENTION

La présente invention vise à résoudre ce problème en mettant en oeuvre un système de commande utilisant au moins un scénario de fonctionnement dégradé afin de garantir le fonctionnement des périphériques sensibles. Par exemple, lorsqu'un commutateur réseau de l'invention achemine le réseau pour un dispositif de surveillance d'incendie et un dispositif de climatisation, il est possible de programmer un scénario de fonctionnement dégradé dans lequel le dispositif de climatisation est déconnecté du réseau afin d'augmenter la durée de fonctionnement du réseau connecté au dispositif de surveillance d'incendie.

A cet effet, l'invention concerne commutateur réseau suivant la revendication 1.

L'invention permet ainsi d'augmenter la durée de connexion des éléments sensibles connectés sur le commutateur réseau en cas de coupures longues et sans augmenter la capacité de l'élément de stockage d'énergie.

Selon un mode de réalisation, l'au moins un scénario de fonctionnement dégradé consiste à bloquer les flux réseau de certains connecteurs du commutateur réseau.

Selon un mode de réalisation, au moins un connecteur aval intègre un fil d'alimentation électrique non utilisé pour transmettre les données et isolé électriquement des autres fils du câble utilisés pour transmettre les données. Ce mode de réalisation utilise la technologie appelée « POE » (selon l'expression anglo-saxonne « *Power Over Ethernet* ») dans la littérature. Dans cette technologie, deux broches de la sortie de données sont connectées avec la tension continue issue du convertisseur de tension de sorte à transmettre la tension continue par des fils d'un câble de données isolés des deux fils du câble utilisés pour transmettre les données.

Cette technologie permet de faciliter l'installation et la maintenance de périphériques reliés sur un seul câble de données au lieu d'utiliser un câble pour transmettre les données et un câble d'alimentation distinct. Ce mode de réalisation permet également de garantir le fonctionnement du périphérique connecté sur la sortie réseau même en cas de coupure d'électricité.

Selon un mode de réalisation, l'au moins un scénario de fonctionnement dégradé consiste à stopper l'alimentation électrique d'au moins un connecteur aval du commutateur réseau. Ce mode de réalisation permet d'économiser une grande quantité d'énergie à la fois pour le commutateur réseau mais également pour toute la structure. Par exemple, si un bâtiment intègre un groupe électrogène pour palier à une coupure d'alimentation électrique du réseau, la coupure de l'alimentation d'un dispositif de climatisation alimenté par le commutateur réseau permet d'augmenter la durée de fonctionnement du groupe électrogène.

Ce mode de réalisation permet de déconnecter progressivement les dispositifs d'un bâtiment en fonction de la capacité de l'élément de stockage et de l'importance de chaque dispositif.

Par exemple, un premier seuil peut permettre de désactiver les caméras de surveillance et un second seuil peut permettre de désactiver les éclairages afin de prolonger le fonctionnement de systèmes de détection d'incendie. Ainsi, lorsqu'une coupure d'alimentation survient, tous les systèmes fonctionnement correctement en utilisant l'élément de stockage d'énergie. Si la coupure est longue, l'élément de stockage d'énergie se décharge et sa capacité devient inférieure à la première valeur seuil, les caméras de surveillance sont alors déconnectées. Si la coupure se prolonge, la capacité de l'élément de stockage devient inférieure à la seconde valeur seuil et l'éclairage est déconnecté pour garantir au maximum le fonctionnement du dispositif des systèmes de détection d'incendie.

Selon un mode de réalisation, le système de commande intègre des moyens de modification de l'au moins un scénario de fonctionnement dégradé de la mémoire de programme. Ce mode de réalisation permet à un administrateur de configurer l'au moins un scénario de fonctionnement dégradé.

Selon un mode de réalisation, le commutateur réseau comporte un organe de routage configuré pour déterminer l'adresse physique de chaque périphérique connecté sur ses connecteurs et pour router les flux réseau entre les connecteurs, l'organe de routage étant configuré pour router certains flux réseau vers le système de commande de sorte à modifier l'au moins un scénario de fonctionnement dégradé de la mémoire de programme. Ce mode de réalisation vise à modifier l'au moins un scénario de fonctionnement dégradé depuis le réseau en utilisant l'adresse de chaque périphérique connecté sur les connecteurs du commutateur réseau.

Selon un mode de réalisation, le commutateur réseau comporte une sortie de commande configurée pour commander l'arrêt d'un périphérique connecté sur ses connecteurs. Certaines machines industrielles présentent des disfonctionnements si elles sont arrêtées brusquement. Ce mode de réalisation vise à commander l'arrêt de ces machines industrielles directement depuis le réseau par l'intermédiaire du commutateur réseau.

Avantageusement, l'au moins un scénario de fonctionnement dégradé consiste à commander l'arrêt d'un périphérique connecté sur un de ses connecteurs. Ce mode de réalisation permet de protéger les machines industrielles nécessitant une procédure d'arrêt en commandant l'arrêt en fonction du l'état de charge de l'élément de stockage d'énergie.

### DESCRIPTION SOMMAIRE DES FIGURES

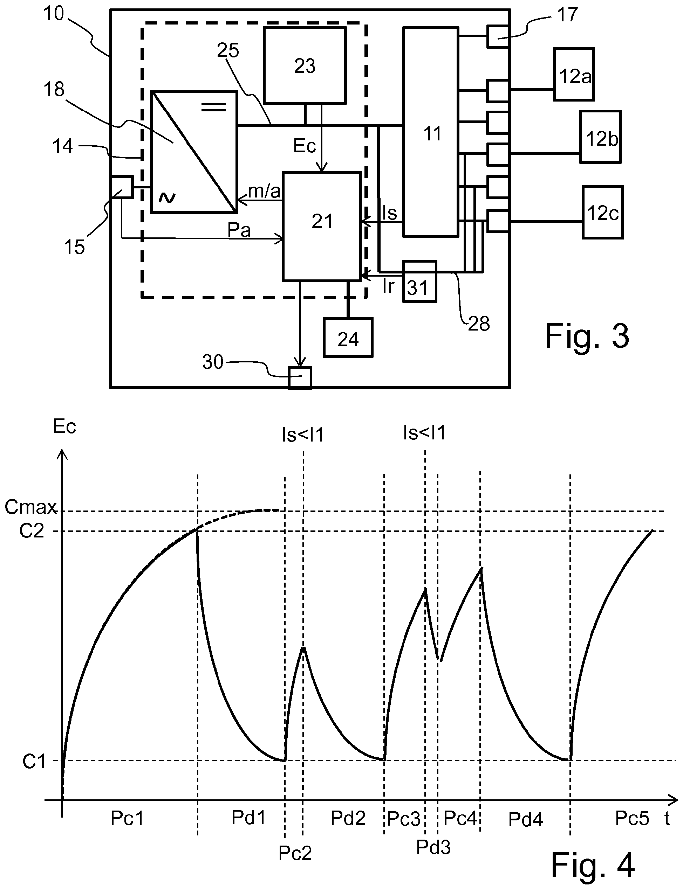

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 et 4 représentent :
- figure 1 : une représentation schématique d'un commutateur réseau à alimentation sauvegardée selon l'état de la technique ;
- figure 2 : une représentation schématique d'un commutateur réseau à alimentation sauvegardée selon un premier mode de réalisation de l'invention ;
- figure 3 : une représentation schématique d'un commutateur réseau à alimentation sauvegardée selon un second mode de réalisation de l'invention ; et
- figure 4 : une représentation temporelle de l'évolution de l'état de charge de l'élément de stockage d'énergie du commutateur réseau de la figure 3.

### DESCRIPTION DETAILLEE DE L'INVENTION

La figure 2 illustre un premier mode de réalisation de l'invention présentant un commutateur réseau **10** comportant un connecteur amont **17**, une pluralité de connecteur avals **16a-16e**, et un organe de routage **11** configuré pour déterminer l'adresse physique de chaque connecteur **16a-16e**, **17** et pour router les flux réseau entre les connecteurs **16a-16e**, **17**.

L'organe de routage **11** est alimenté par une tension continue issue d'un convertisseur de tension **18** apte à transformer la tension alternative d'une entrée **15** en une tension continue **25**.

Une alimentation de secours **14** est également réalisée par le biais d'un élément de stockage d'énergie **23** connecté à la tension continue **25** et configurée pour alimenter l'organe de routage **11** lorsque l'élément de stockage d'énergie **23** est chargé et que l'entrée **15** de tension alternative n'est pas alimentée. De préférence, l'élément de stockage d'énergie **23** est une batterie au lithium, dont la capacité est comprise entre 5 Wh et 5 KWh.

Selon l'invention, le commutateur réseau **10** comporte également un système de commande **21** relié à une mémoire de programme **24** intégrant au moins un scénario de fonctionnement dégradé. Le système de commande **21** reçoit un signal **Pa** permettant de détecter une perte d'alimentation de l'entrée **15** de tension alternative et un signal **Ec** représentant l'état de charge de l'élément de stockage d'énergie **23**.

A l'aide de ces informations, le système de commande **21** impose l'utilisation d'un ou plusieurs scénarios de fonctionnement dégradé stockés dans la mémoire de programme **24** lorsque l'entrée **15** ne reçoit aucune alimentation électrique et que l'état de charge **Ec** de l'élément de stockage d'énergie est inférieur à une valeur seuil.

Dans l'exemple de la figure 1, le ou les scénarios de fonctionnement dégradé peuvent consister à bloquer certains flux réseau d'un ou plusieurs connecteurs **16a-16e**, **17** du commutateur réseau **10**. Lorsque la mémoire de programme **24** intègre plusieurs scénarios de fonctionnement dégradé, le système de commande **21** applique successivement ces scénarios de fonctionnement dégradé en comparant l'état de charge **Ec** de l'élément de stockage d'énergie **23** avec plusieurs valeurs seuil.

Par exemple, la mémoire de programme **24** comporte un premier scénario de fonctionnement dégradé qui décrit que le réseau des connecteurs **16b** et **16e** est stoppé lorsque l'entrée **15** ne reçoit aucune alimentation électrique et que l'état de charge **Ec** de l'élément de stockage d'énergie est inférieur à 50% de la valeur nominale de charge de l'élément de stockage d'énergie **23**.

Un autre scénario de fonctionnement dégradé peut prévoir que le réseau des connecteurs **16a** et **16d** est stoppé lorsque l'entrée **15** ne reçoit aucune alimentation électrique et que l'état de charge **Ec** de l'élément de stockage d'énergie est inférieur à 30% de la valeur nominale de charge de l'élément de stockage d'énergie **23**.

L'écriture et la modification de ces scénarios de fonctionnement dégradé peut être effectuée localement par un administrateur, par exemple lorsque la mémoire de programme **24** est stockée sur une carte amovible. De préférence, la mémoire de programme **24** peut être modifiée à distance par un administrateur en utilisant le réseau connecté sur le commutateur réseau **10** par le connecteur amont **17** ou par l'un des connecteurs avals **16a-16e**. A cet effet, le système de commande **21** est relié sur l'organe de routage **11** et il intègre des moyens de modification des scénarios de fonctionnement dégradé de la mémoire de programme **24**. Pour aider l'administrateur à sélectionner les périphériques à couper en cas de coupure d'alimentation électrique, l'organe de routage **11** peut intégrer une table d'identification des périphériques connectés sur ses connecteurs **16a-16e**, **17**.

En outre, l'alimentation de l'organe de routage **11** est également commandée par le système de commande **21**. Selon un mode de réalisation de l'invention, le système de commande **21** détecte un état de la charge **Ec** de l'élément de stockage d'énergie **23** et commande le fonctionnement ou l'arrêt du premier convertisseur de tension **18**. A cet effet, le signal **m/a** permet d'interrompre ou de mettre en marche le premier convertisseur de tension **18**.

Le système de commande **21** induit le fonctionnement du convertisseur de tension **18** lorsqu'il détecte que la charge **Ec** de l'élément de stockage d'énergie **23** est inférieure à une première valeur seuil **C1**, de sorte à garantir un état de charge minimal dans l'élément de stockage d'énergie **23**. Le système de commande **21** interrompt le fonctionnement du convertisseur de tension **18** lorsqu'il détecte que la charge **Ec** de l'élément de stockage d'énergie **23** est supérieure à une seconde valeur seuil **C2**, la seconde valeur seuil **C2** pouvant correspondre à un état de charge maximum **Cmax** de l'élément de stockage d'énergie **23**.

La figure 3 illustre un second mode de réalisation de l'invention dans lequel le système de commande **21** intègre également d'autres informations. Le système de commande **21** reçoit, par exemple, une mesure de la consommation électrique **Is** de l'organe de routage **11** de sorte à interrompre le fonctionnement du convertisseur de tension **18** lorsqu'il détecte que la consommation électrique **Is** de l'organe de routage **11** est inférieure à une troisième valeur seuil **I1**.

En outre, trois connecteurs avals **16a-16e** intègrent un fil d'alimentation électrique **28** non utilisé pour transmettre les données, et isolé électriquement des autres fils du câble utilisés pour transmettre les données. Ce fil électrique **28** est connecté sur la tension continue **25**. Les périphériques **12b** et **12c** connectés sur ces sorties réseau peuvent donc être alimentés par la technologie POE alors que le périphérique **12a** connecté sur une sortie réseau qui n'intègre pas de fil d'alimentation électrique **28** ne peut pas être alimenté par la technologie POE.

Un dispositif de mesure **31** d'une consommation électrique **Ir** des périphériques **12b**, **12c** connectés en POE est disposé dans le commutateur réseau **10** et transmet cette consommation électrique **Ir** au système de commande **21**. En variante, chaque connecteur aval **16a-16e** intégrant un fil d'alimentation électrique **28** peut comprendre son propre dispositif de mesure **31** de sorte à transmettre des mesures de consommation électrique **Ir** indépendantes pour chaque connecteur aval **16a-16e**.

Selon l'invention, au moins un scénario dégradé est commandé en fonction de la consommation électrique **Ir** des périphériques **12b, 12c** connectés en POE. Par exemple, un scénario dégradé peut correspondre à la fourniture d'une quantité limité d'énergie électrique, la mesure de la consommation électrique **Ir** permettant de déterminer lorsque la quantité d'énergie a été consommée.

A cet effet, chaque périphérique **12b**, **12c** connecté sur les connecteurs avals **16a-16e** peut être référencé dans un tableau associant le type de périphérique **12b**, **12c** et une quantité d'énergie allouée en cas de rupture de courant.

Par exemple, un périphérique de type caméra alimenté en POE par le commutateur réseau **10** peut bénéficier d'un scénario dégradé permettant de consommer 0.1 kW h de sorte à surmonter les courtes pannes sans dégrader le fonctionnement du bâtiment alors qu'un périphérique de type alarme peut bénéficier d'un scénario dégradé permettant de consommer 0.5 kW h de sorte à maintenir les fonctions d'alerte suffisamment longtemps. Dans le même temps, un dispositif de protection de personnes peut bénéficier d'un scénario dégradé sans limite de consommation de sorte à maintenir son état de fonctionnement le plus longtemps possible.

L'invention permet ainsi d'affiner les scénarios de fonctionnement du commutateur réseau **10** en fonction de la nature des périphériques **12b, 12c** connectés en POE et des besoins du bâtiment.

Cette consommation électrique **Ir** permet au système de commande **21** de modifier le premier seuil **C1** en fonction de la consommation électrique **Is** de l'organe de routage **11** et de la consommation électrique **Ir** de chaque connecteur aval **16a-16e** de sorte à garantir un temps d'alimentation minimum lorsque l'entrée **15** de tension alternative n'est pas alimentée.

La connexion en POE des connecteurs avals **16a-16e** permet également d'améliorer le gain d'énergie réalisé par les scénarios de fonctionnement dégradé en prévoyant non seulement la coupure du réseau mais également la coupure de l'alimentation électrique des connecteurs avals **16a-16e** connectés en POE. En outre, le système de commande **21** est relié à une sortie de commande **30** configurée pour commander l'arrêt d'un périphérique externe, de préférence connecté sur ses connecteurs avals **16a-16e.** Les scénarios de fonctionnement dégradé peuvent ainsi organiser l'arrêt d'un périphérique externe, par exemple un robot industriel.

Le système de commande **21** peut également être relié à une entrée de commande externe, afin de commander la mise en marche ou l'interruption du premier convertisseur de tension **18** depuis un dispositif externe, et à une sortie d'information permettant de rendre compte de l'état du premier convertisseur de tension **18** et/ou de l'élément de stockage **23** à un dispositif externe.

En variante, la sortie d'information permet également de transmettre une information de géolocalisation du dispositif d'alimentation **10**.

La figure 4 illustre un exemple de variations de la charge **Ec** de l'élément de stockage **23** en fonction d'un temps effectif d'utilisation du commutateur réseau **10**. Dans une première phase **Pc1,** l'élément de stockage **23** est complètement déchargé et le système de commande **21** impose la mise en fonctionnement **m/a** du premier convertisseur de tension **18**. L'élément de stockage **23** est ainsi chargé par l'énergie alternative provenant de l'entrée **15** et convertie par le premier convertisseur **18**. Lors de cette phase de charge **Pc1**, l'état de charge **Ec** de l'élément de stockage **23** croit de manière logarithmique en direction d'un état de charge maximum **Cmax**. Cette phase de charge **Pc1** est stoppée lorsque le système de commande **21** détecte que la charge **Ec** de l'élément de stockage **23** est supérieure à une valeur seuil **C2**.

Commence alors une première phase de décharge **Pd1**, au cours de laquelle le système de commande **21** interrompt **m/a** le fonctionnement du premier convertisseur de tension **18**. L'élément de stockage **23** se décharge alors pour combler les besoins en énergie de l'organe de routage **11** et des périphériques **12b**, **12c** connectés en POE.

Lors de cette phase de décharge **Pd1**, l'état de charge **Ec** de l'élément de stockage **23** décroit de manière logarithmique en direction d'un état de charge **Ec** nul. Cette phase de décharge **Pd1** est stoppée lorsque le système de commande **21** détecte que la charge **Ec** de l'élément de stockage **23** est inférieure à une valeur seuil **C1**. Les phases de charge **Pc1-Pc5** et de décharge **Pd1-Pd4** s'alternent ainsi pendant toute la durée de vie du commutateur réseau **10**.

Certains évènements externes peuvent modifier cette alternance de phases de charge **Pc1-Pc5** et de décharge **Pd1-Pd4**. Par exemple, un signal externe peut indiquer une plage horaire au cours de laquelle l'organe de routage **11** est particulièrement peu sollicité, l'élément de stockage **23** sera donc préférentiellement chargé avant d'entrer dans cette plage horaire.

Pour un exemple illustré sur la figure 4, au cours des phases de charge **Pc2** et **Pc3**, le système de commande **21** détecte que le courant **Is** est inférieur à une valeur seuil **I1**, le rendement du convertisseur de tension **18** est donc particulièrement faible.

Suite à cette information, les phases de charge **Pc2** et **Pc3** sont stoppées pour entamer une phase de décharge **Pd2**, **Pd3** au cours desquelles l'élément de stockage d'énergie **23** alimente l'organe de routage **11** et les périphériques **12b**, **12c** connectés en POE.

Pour un autre exemple illustré sur la figure 4, au cours de la phase de décharge **Pd3**, le signal **Sc** informe que la météo va bientôt changer et que le dispositif de production d'énergie renouvelable du bâtiment va devenir inopérant. Suite à cette information, la phase de décharge **Pd3** est stoppée pour entamer une phase de charge **Pc4**, alors que le dispositif de production d'énergie renouvelable du bâtiment est toujours opérationnel. Lorsque les conditions climatiques sont telles que le dispositif de production d'énergie renouvelable du bâtiment est inopérant, la phase de charge **Pc4** est stoppée pour privilégier la consommation de l'élément de stockage **23** au cours d'une phase de décharge **Pd4**.

En pratique, dans la phase de décharge **Pd1-Pd4** de l'élément de stockage **23**, l'organe de routage **11** ne sollicite pas constamment un besoin en alimentation électrique, et la phase de décharge **Pd1-Pd4** de l'élément de stockage **23** peut durer plusieurs jours. De même, dans la phase de charge **Pc1-Pc5** de l'élément de stockage **23**, si la charge est préférentiellement effectuée par un dispositif de production d'énergie renouvelable, cette phase de charge **Pc1-Pc5** peut être entrecoupée de phases durant lesquelles le dispositif de production d'énergie est inopérant.

D'autres évènements peuvent également modifier cette alternance de phases de charge **Pc1-Pc5** et de décharge **Pd1-Pd4,** tels que la modification de la consommation d'un périphérique connecté en POE induisant un changement du seuil **C1**.

L'invention permet ainsi d'améliorer la durée de la connexion réseau des éléments sensibles connectés sur le commutateur réseau.

En outre, l'invention permet également de réduire la consommation énergétique d'un commutateur réseau **10** ainsi que des périphériques connectés en POE sur ce commutateur réseau **10**. L'invention permet de paramétrer un grand nombre de scénarios afin de réduire la consommation énergétique d'un bâtiment ou d'une agglomération.

## Revendications

1. Commutateur réseau (10) comportant :
- une entrée (15) de tension alternative,
- une pluralité de connecteurs (16a-16e) destinés aux raccordements des câbles de transmission des flux réseaux avec des périphériques, au moins un connecteur (16a-16e) intégrant un fil d'alimentation électrique (28) non utilisé pour transmettre les données et isolé électriquement des autres fils du câble utilisés pour transmettre les données,
- un convertisseur de tension (18) apte à transformer une tension alternative de l'entrée (15) en une tension continue (25), et
- une alimentation de secours (14) comportant un élément de stockage d'énergie (23) connecté à la tension continue (25) et configurée pour alimenter le commutateur réseau (10) lorsque l'élément de stockage d'énergie (23) est chargé et que l'entrée (15) de tension alternative n'est pas alimentée,
***caractérisé* en ce que** le commutateur réseau (10) comporte, en outre :
- des moyens de mesure d'une consommation électrique (Ir) d'au moins un connecteurs (16a-16e), chaque périphérique connecté sur l'au moins un connecteur (16a-16e) étant référencé dans un tableau associant le type de périphérique, une indication sur l'importance du périphérique et une quantité d'énergie allouée en cas de rupture de courant ;
- une mémoire de programme (24) intégrant plusieurs scénarios de fonctionnement dégradé, et
- un système de commande (21) configuré pour :
▪ détecter une perte d'alimentation (Pa) au niveau de l'entrée (15) de tension alternative,
▪ détecter un état de charge (Ec) de l'élément de stockage d'énergie (23),
▪ appliquer successivement plusieurs scénarios de fonctionnement dégradé, lorsqu'il détecte une perte d'alimentation (Pa), en comparant l'état de charge (Ec) de l'élément de stockage d'énergie (23) avec plusieurs valeurs seuil sélectionnées en fonction de l'importance du périphérique ; au moins un scénario dégradé étant commandé en fonction de la consommation électrique (Ir) mesurée par lesdits moyens de mesure et de la quantité d'énergie allouée au périphérique en cas de rupture de courant.

2. Commutateur réseau selon la revendication 1, ***caractérisé* en ce que** l'au moins un scénario de fonctionnement dégradé consiste à bloquer les flux réseau de certains connecteurs (16a-16e, 17) du commutateur réseau (10).

3. Commutateur réseau selon la revendication 1 ou 2, ***caractérisé* en ce qu'**au moins un connecteur (16a-16e) intègre un fil d'alimentation électrique (28) non utilisé pour transmettre les données et isolé électriquement des autres fils du câble utilisés pour transmettre les données.

4. Commutateur réseau selon la revendication 3, ***caractérisé* en ce que** l'au moins un scénario de fonctionnement dégradé consiste à stopper l'alimentation électrique d'au moins un connecteur (16a-16e) du commutateur réseau (10).

5. Commutateur réseau selon l'une des revendications 1 à 4, ***caractérisé* en ce que** le système de commande (21) intègre des moyens de modification de l'au moins un scénario de fonctionnement dégradé de la mémoire de programme (24).

6. Commutateur réseau selon l'une des revendications 1 à 5, ***caractérisé* en ce qu'**il comporte un organe de routage (11) configuré pour déterminer l'adresse physique de chaque périphérique connecté sur ses connecteurs (11a-16e, 17) et pour router les flux réseau entre les connecteurs (11a-16e, 17), l'organe de routage (11) étant configuré pour router certains flux réseau vers le système de commande (21) de sorte à modifier l'au moins un scénario de fonctionnement dégradé de la mémoire de programme (24).

7. Commutateur réseau selon l'une des revendications 1 à 6, ***caractérisé* en ce qu'**il comporte une sortie de commande (30) configurée pour commander l'arrêt d'un périphérique connecté sur ses connecteurs (11a-16e, 17).

8. Commutateur réseau selon la revendication 7, ***caractérisé* en ce que** l'au moins un scénario de fonctionnement dégradé consiste à commander l'arrêt d'un périphérique connecté sur un de ses connecteurs (11a-11e, 17).

## Patentansprüche

1. Netzwerkschalter (10) mit:
- einem Wechselspannungseingang (15),
- mehreren Steckverbindern (16a-16e) für den Anschluss der Übertragungskabel der Netzwerkströme an Peripheriegeräte, wobei mindestens ein Steckverbinder (16a-16e) eine elektrische Versorgungsader (28) enthält, die nicht zur Datenübertragung genutzt wird und elektrisch von den anderen für die Datenübertragung genutzten Adern getrennt ist,
- einen Spannungswandler (18), der eine Wechselspannung des Eingangs (15) in eine Gleichspannung (25) umwandeln kann, und
- eine Notstromversorgung (14) mit einem Energiespeicherelement (23), das mit der Gleichspannung (25) verbunden ist und dazu konfiguriert ist, den Netzwerkschalter (10) zu versorgen, wenn das Energiespeicherelement (23) aufgeladen ist und der Wechselspannungseingang (15) nicht mit Strom versorgt wird,
***dadurch gekennzeichnet, dass*** der Netzwerkschalter (10) außerdem umfasst:
- Messeinrichtungen zur Messung eines Stromverbrauchs (Ir) mindestens eines Steckverbinders (16a-16e), jedes Peripheriegerät, das mit mindestens einem Steckverbinder (16a-16e) verbunden ist, ist in einer Tabelle verzeichnet, in der die Art des Peripheriegerätes, ein Hinweis zur Bedeutung des Peripheriegerätes und die im Falle eines Stromausfalls zugewiesene Energiemenge angegeben sind;
- einen Programmspeicher (24), der verschiedene Szenarien für einen eingeschränkten Betrieb enthält, und
- ein Steuerungssystem (21), dazu konfigurierte:
▪ einen Versorgungsverlust (Pa) am Wechselspannungseingang (15) zu entdecken,
▪ einen Ladezustand (Ec) des Stromspeicherelementes (23) zu erkennen,
▪ nacheinander verschiedene Szenarien für eingeschränkten Betrieb anzuwenden, sobald ein Versorgungsverlust (Pa) erkannt wird, indem der Ladezustand (Ec) des Stromspeicherelementes (23) mit verschiedenen Schwellenwerten, ausgewählt in Abhängigkeit von der Bedeutung des Peripheriegerät, verglichen wird; mindestens ein eingeschränktes Betriebsszenario wird entsprechend dem Stromverbrauch (Ir) gesteuert, der durch diese Messeinrichtungen gemessen wird sowie entsprechend der Energie, die dem Peripheriegerät bei einem Stromausfall zugewiesen wird.

2. Netzwerkschalter nach Anspruch 1, ***dadurch gekennzeichnet*, dass** das mindestens ein eingeschränktes Betriebsszenario darin besteht, die Netzwerkströme bestimmter Steckverbindungen (16a-16e, 17) des Netzwerkschalters (10) zu blockieren.

3. Netzwerkschalter nach Anspruch 1 oder 2, ***dadurch gekennzeichnet*, dass** mindestens ein Steckverbinder (16a-16e) eine elektrische Versorgungsader (28) enthält, die nicht zur Datenübertragung genutzt wird und elektrisch von den anderen für die Datenübertragung genutzten Adern getrennt ist.

4. Netzwerkschalter nach Anspruch 3, ***dadurch gekennzeichnet*, dass** das mindestens eine eingeschränkte Betriebsszenario darin besteht, die Stromversorgung mindestens eines Steckverbinders (16a-16e) des Netzwerkschalters (10) zu stoppen.

5. Netzwerkschalter nach einem der Ansprüche 1 bis 4, ***dadurch gekennzeichnet*, dass** das Steuersystem (21) Vorrichtungen zur Änderung des mindestens einen eingeschränkten Betriebsszenarios des Programmspeichers (24) enthält.

6. Netzwerkschalter nach einem der Ansprüche 1 bis 5, ***dadurch gekennzeichnet*, dass** er ein Routing- Element (11) enthält, konfiguriert zur Bestimmung der physikalischen Adresse jedes Peripheriegerätes, das mit seinen Steckverbindern (11a-16e, 17) verbunden ist und um die Netzwerkströme zwischen den Steckverbindern (11a-16e, 17) zu leiten, das Routing- Element (11) ist dazu konfiguriert, verschiedene Netzwerströme zum Steuersystem (21) zu leiten, so dass das mindestens eine eingeschränkte Betriebsszenario des Programmspeichers (24) verändert werden kann.

7. Netzwerkschalter nach einem der Ansprüche 1 bis 6, ***dadurch gekennzeichnet*, dass** er einen Steuerungsausgang (30) enthält, konfiguriert zur Steuerung des Abschaltens eines mit seinen Steckverbindern (11a-16e, 17) verbundenen Peripheriegerätes.

8. Netzwerkschalter nach Anspruch 7, ***dadurch gekennzeichnet*, dass** das mindestens eine eingeschränkte Betriebsszenario darin besteht, das Abschalten eines mit seinen Steckverbindern (11a-11e, 17) verbundenen Peripheriegerätes zu steuern.

## Claims

1. Network switch (10) incorporating:
▪ one AC power input (15);
▪ multiple connectors (16a-16e) for the connection of network stream transmission cables to peripherals, plus at least one connector (16a-16e) incorporating a power wire (28) that is not used to transmit data and that is electrically isolated from the other wires of the cable used to transmit data;
▪ one power converter (18) able to convert AC voltage from the input (15) into DC voltage (25); and
▪ one backup power supply (14) incorporating a power storage component (23) connected to the DC power (25) and configured to power the network switch (10) when the power storage component (23) is charged and the AC power input (15) is not powered;
**characterized by** the fact that the network switch (10) also incorporates:
▪ means of measurement of a power consumption (Ir) of at least one connector (16a-16e), with each peripheral connected to the connector (16a-16e) - of which there is at least one - being referenced in a table associating the type of peripheral, a grading of the importance of the peripheral, and a quantity of power allocated in the event of a power outage;
▪ one program memory (24) incorporating multiple downgraded operating scenarios; and
▪ a control system (21) configured to:
▪ detect a power outage (Pa) at the AC power input (15);
▪ detect a state of charging (Ec) of the power storage component (23);
▪ successively apply multiple downgraded operating scenarios when it senses a power outage (Pa), by comparing the state of charge (Ec) of the power storage component (23) with multiple threshold values selected as a function of the importance of the peripheral;
▪ at least one downgraded scenario that is commanded as a function of the power consumption (Ir) measured by the said means of measurement, and of the quantity of power allocated to the peripheral in the event of a power outage.

2. Network switch in accordance with claim 1, **characterized by** the fact that the downgraded operating scenario (of which there is at least one) consists in blocking the network streams of certain connectors (16a-16e, 17) of the network switch (10).

3. Network switch in accordance with claim 1 or claim 2, **characterized by** the fact that at least one connector (16a-16e) incorporates a power supply wire (28) that is not used to transmit data and that is electrically isolated from the other wires of the cable used to transmit data.

4. Network switch in accordance with claim 3, **characterized by** the fact that the downgraded operating scenario (of which there is at least one) consists in halting the power supply of at least one connector (16a-16e) of the network switch (10).

5. Network switch in accordance with one of claims 1 to 4, **characterized by** the fact that the control system (21) incorporates means of modification of the downgraded operating scenario (of which there is at least one) of the program memory (24).

6. Network switch in accordance with one of claims 1 to 5, **characterized by** the fact that it incorporates a routing device (11) configured to establish the physical address of each peripheral connected to one of its connectors (11a-16e, 17), and to route the streams between the connectors (11a-16., 17), with the routing device (11) being configured to route certain network streams to the control system (21), so as to modify the downgraded operating scenario (of which there is at least one) of the program memory (24).

7. Network switch in accordance with one of claims 1 to 6, **characterized by** the fact that it incorporates one control output (30) configured to command the shutdown of a peripheral connected to one of its connectors (11a-16e, 17).

8. Network switch in accordance with claim 7, **characterized by** the fact that the downgraded operating scenario (of which there is at least one) consists in commanding the shutdown of a peripheral connected to one of its connectors (11a-16e, 17).
